(19) Europäisches Patentamt
European Patent Office
Office européen des brevets

(11) Publication number: **0 464 204 A1**

(12) **EUROPEAN PATENT APPLICATION published in accordance with Art. 158(3) EPC**

(21) Application number: **90904699.7**

(51) Int. Cl.$^5$: **C08J 9/04**

(22) Date of filing: **20.03.90**

(86) International application number:
**PCT/JP90/00373**

(87) International publication number:
**WO 90/11319 (04.10.90 90/23)**

(30) Priority: **22.03.89 JP 70206/89**

(43) Date of publication of application:
**08.01.92 Bulletin 92/02**

(84) Designated Contracting States:
**AT BE CH DE DK ES FR GB IT LI LU NL SE**

(71) Applicant: **DOW MITSUBISHI KASEI LIMITED**
**13-12, Ginza 5-chomeChuo-ku**
**Tokyo 104(JP)**

(72) Inventor: **OHKUBO, Shoichi Dow Mitsubishi Kasei Limited**
**Yokohama Laboratory 1000, Kamoshida-cho**
**Midori-ku Yokohama-shi Kanagawa 227(JP)**
Inventor: **KATANO, Hiroaki Dow Mitsubishi Kasei Limited**
**Yokohama Laboratory 1000, Kamoshida-cho**
**Midori-ku Yokohama-shi Kanagawa 227(JP)**

(74) Representative: **Burford, Anthony Frederick**
**W.H. Beck, Greener & Co. 7 Stone Buildings**
**Lincoln's Inn**
**London WC2A 3SZ(GB)**

# (54) METHOD OF PRODUCING FLAME-RETARDANT POLYISOCYANURATE FOAM.

(57) A method of producing flame-retardant polyisocyanurate foam according to the present invention is characterized by using thermally expansive graphite as the flame retardant in the reaction of a polyisocyanate with a polyol in an NCO to OH equivalent ratio of at least 1.5 in the presence of a catalyst and a blowing agent. The obtained polyisocyanurate foam is remarkably excellent in flame retardance.

EP 0 464 204 A1

## TECHNICAL FIELD

The present invention relates to a process for the preparation of a flame-retardant polyisocyanurate foam. More particularly, the present invention relates to a process for the preparation of a flame-retardant polyisocyanurate foam having an especially high flame retardancy.

## BACKGROUND ART

Since a polyisocyanurate foam has an excellent flame retardancy and heat resistance, this foam has been widely used in the fields where high fire-proofing characteristics and excellent high-temperature characteristics are required. Especially in the field of construction materials, the industrial growth of an organic flame-retardant polyisocyanurate foam, which is a heat-insulating material superior to conventional inorganic materials, is favorable and smooth.

A polyisocyanurate foam is prepared by mixing and stirring an excessive amount of an organic polyisocyanate and a polyhydroxyl compound with an isocyanate-trimerizing catalyst, a foaming agent and a foam stabilizer.

The obtained polyisocyanurate foam has a similar heat resistance and flame resistance characteristic to that of isocyanurate bond, but the polyisocyanurate foam still has an unsatisfactory flame retardancy. Recently, to prevent damage by fires, heat-insulating materials must have a high flame retardancy, and further, the flame retardancy of such polyisocyanurate foams must be improved.

Various attempts have been made to improve the flame retardancy of polyisocyanurate foams, and various processes have been proposed. For example, there are known a process in which a phosphoric acid compound, a halogen compound, aluminum hydroxide and an inorganic compound such as borax or pearlite are added to an isocyanurate foam, and a process in which a phosphorus-containing polyol, a halogen-containing polyol or a silicone type polyol (Japanese Examined Patent Publication No. 57-42086) is used as the polyol which is one starting material.

As another means for attaining the above-mentioned object, there has been proposed a process in which thermally expansible graphite is added to an isocyanurate product to increase the flame retardancy (U.S. Patent No. 3,574,644, U.S. Patent No. 4,689,369 and Japanese Examined Patent Publication No. 61-29374).

Nevertheless, a flame-retardant polyisocyanurate foam satisfying the flame retardancy requirement, which has become more severe in recent years, cannot be obtained according to any of the foregoing processes, and to obtain a desired flame retardancy, a large quantity of an additive for improving the flame retardancy must be incorporated, which results in defects such as a reduction of the physical properties of the foam and an increase of the cost of the starting materials.

## DISCLOSURE OF THE INVENTION

Therefore a primary object of the present invention is to provide a process for the preparation of a polyisocyanurate foam having a much improved flame retardancy.

In accordance with the present invention, there is provided a process for the preparation of a flame-retardant polyisocyanurate foam, which comprises reacting a polyisocyanate with a polyhydroxyl compound at an NCO/OH equivalent ratio of at least 1.5 in the presence of a catalyst and a foaming agent, wherein thermally expansible graphite is added as a flame retardant.

## BEST MODE OF CARRYING OUT THE INVENTION

The present invention will now be described in detail.

In the present invention, a polyisocyanate is reacted with a polyhydroxyl compound at an NCO/OH equivalent ratio of at least 1.5 to form a polyisocyanurate foam. If the NCO/OH equivalent ratio is lower than 1.5, the ratio of formation of the isocyanurate bond having a heat resistance and flame resistance is low and the flame retardancy of the obtained foam is poor. In the present invention, to increase the isocyanurate-forming ratio and further increase the flame retardancy of the foam, preferably the NCO/OH equivalent ratio is at least 2.5. In general, the higher the NCO/OH equivalent ratio, the more improved the flame retardancy of the obtained foam, but if the NCO/OH equivalent ratio exceeds 6.0, the obtained foam becomes brittle, and when the obtained foam is actually used, the adhesiveness to other face material is reduced. Accordingly, it is especially preferable that the NCO/OH equivalent ratio is in the range of from 2.5 to 6.0.

In the present invention, in reacting a polyisocyanate with a polyhydroxyl compound at the above-mentioned NCO/OH equivalent ratio in the presence of a catalyst and a foaming agent, thermally expansible graphite is added as the flame retardant.

In a broad sense, the thermally expansible graphite used in the present invention includes a variety of compositions prepared by various processes. In the present invention, however, thermally expansible graphite prepared by treating graphite such as natural graphite, thermally decomposed graphite or kish graphite with a mixture of concentrated sulfuric acid and a strong oxidant, water-washing the treated graphite and drying the graphite is preferably used. This thermally expansible graphite has a characteristic property such that, when the graphite is suddenly treated at a temperature higher than about 500 °C, the graphite expands scores of times to several hundreds of times in the direction of the C-axis. The thermally expansible graphite used in the present invention has preferably a characteristic property such that when the graphite is suddenly heated at 100 °C for 10 seconds, the expansion degree is 50 to 250 cc/g. This thermally expansible graphite is prepared by placing graphite pulverized to about 20 to about 100 mesh in contact with a liquid mixture comprising concentrated sulfuric acid having a concentration of 93 to 99% by weight, especially 98% by weight, and aqueous hydrogen peroxide having a concentration of 30 to 60% by weight, especially 60% by weight, at a temperature lower than 45 °C for 10 to 30 minutes, water-washing the graphite and drying the graphite.

The thermally expansible graphite especially preferably used in the present invention further contains an alkali metal such as Na or K and/or an alkaline earth metal such as Ca, Ba or Mg. This alkali metal or alkaline earth metal forms a salt with free sulfuric acid contained in the thermally expansible graphite. Furthermore, preferably the pH value of an aqueous dispersion of the thermally expansible graphite having a concentration of 1% by weight is at least 4.5. This thermally expansible graphite can be prepared by subjecting graphite to the oxidizing treatment with the above-mentioned liquid mixture of concentrated sulfuric acid and aqueous hydrogen peroxide and after or during the subsequent water washing step, bringing the treated graphite into contact with an aqueous solution of a hydroxide of an alkali metal and/or an alkaline earth metal, filtering the liquid and drying the residual solid.

The pH value of an aqueous dispersion of the thermally expansible graphite used in the present invention, having a concentration of 1% by weight, is preferably at least 4.5. If this pH value is lower than 4.5, the effect of the catalyst for forming the foam is reduced and it is possible that the production will fail at a desired reaction speed. This pH value has no particular upper limit, but if the pH value exceeds 8, the graphite comes to contain the alkali metal or alkaline earth metal in excess and it is possible that adverse influences will be imposed on the physical properties of the foam. In general, preferably the pH value is 4.5 to 8.

The pH value of an aqueous dispersion of the thermally expansible graphite having a concentration of 1% by weight is determined in the present invention by throwing 1 g of the graphite to be measured into 99 g of deionized water, stirring the mixture for 10 minutes and measuring the pH value by a pH electrode. The deionized water to be used for this measurement should have a pH value in the range of from 5.5 to 7.0.

In the thermally expandible graphite used in the present invention, preferably the alkali metal and/or alkaline earth metal is contained in the form of a sulfate, but a part of the metal may be present in the form of an excessive hydroxide or a carbonate.

In view of the flame-retardant effect and the dispersibility in the foam, preferably the particle size of the thermally expansible graphite is 30 to 100 mesh. If the particle size of the thermally expansible graphite is finer than 80 mesh, the thermal expansibility tends to decrease, and if the particle size of the thermally expansible graphite is finer than 150 mesh, the thermal expansibility is drastically reduced, with the result that the flame retardant effect in the foam is reduced. If the particle size is large, for example, about 20 to about 30 mesh, the thermal expansibility is sufficiently high, but the dispersibility in the foam-forming starting materials is not satisfactory, and therefore, a desired flame retardancy cannot be obtained and the operation efficiency is reduced. Preferably, the particle size of the thermally expansible graphite used in the present invention is 30 to 100 mesh, and most preferably the graphite is classified to about 40 to about 80 mesh.

The particle size of the thermally expansible graphite generally depends on the particle size of the starting graphite. Accordingly, the particle size can be easily adjusted by pulverizing the starting graphite or obtained thermally expansible graphite.

The polyisocyanate used in the present invention is an organic polyisocyanate having at least two isocyanate groups in the molecule, which includes an aliphatic polyisocyanate compound, an aromatic polyisocyanate compound and modification products thereof. As the aliphatic polyisocyanate, there can be mentioned, for example, hexamethylene diisocyanate, isophorone diisocyanate, dicyclohexylmethane diisocyanate and methylcyclohexane diisocyanate. As the aromatic polyisocyanate, there can be mentioned,

for example, toluene diisocyanate, diphenylmethane diisocyanate and polymeric diphenylmethane diisocyanate. As the modification product, there can be mentioned carbodiimide modification products and prepolymer modification products. An aromatic polyisocyanate and a modification product thereof are preferably used as the polyisocyanate in the present invention. Diphenylmethane diisocyanate, polymeric diphenylmethane diisocyanate and modification products thereof are especially preferably used. These isocyanates will now be described in detail. Diphenylmethane diisocyanate has the following structure:

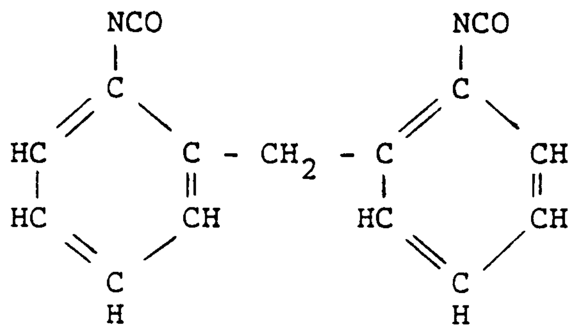

Polymeric diphenylmethane diisocyanate is a polymer of the above-mentioned diphenylmethane diisocyanate, which has an NCO content of 29 to 35% and a viscosity lower than 2500 cps (25° C).

As the modification product, there can be mentioned a carbodiimide modification product and a prepolymer modification product. The carbodiimide modification product can be formed by introducing a carbodiimide bond by using a known phosphorus type catalyst. The prepolymer modification product is obtained by reacting an isocyanate with a polyol while leaving an isocyanate group at the terminal. All of polyols customarily used for polyisocyanurate resins can be used as the polyol for the prepolymer.

Any compounds having at least two active hydrogen atoms in the molecule can be used as the polyhydroxyl compound in the present invention. For example, the following compounds (a) through (d) can be used.

(a) Alcohols and amines such as ethylene glycol, propylene glycol, butylene glycol, glycerol, trimethylolpropane, pentaerythritol, methylamine, ethylamine, ethylenediamine and toluenediamine.

(b) Polyether polyols formed by adding an alkylene oxide such as ethylene oxide or propylene oxide to the compound (a), such as diethylene glycol, triethylene glycol, polyethylene glycol and dipropylene glycol.

(c) Polyester polyols formed by esterifying a polycarboxylic acid with the compound (a) or (b) or by adding an alkylene oxide to a polycarboxylic acid.

As the polycarboxylic acid, there can be used, for example, maleic acid, succinic acid, adipic acid, sebacic acid, phthalic acid, trimellitic acid and pyromellitic acid.

(d) Other polyols which are included in any of the foregoing polyols in a broad sense, for example, special polyols for attaining the flame retardancy and low smoke-generating property, such as a halogen type polyol having a halogen atom, a phosphoric acid ester type polyol having at least one hydrogen atom, a halogenophosphoric acid ester type polyol formed by adding a halogen atom to a phosphoric acid ester type polyol, and a silicate type polyol having a silicon atom.

These polyols can be used alone or in the form of a mixture of two or more thereof.

As the polyol preferable for improving the low smoke-generating property, heat resistance, flame retardancy and low brittleness of the obtained flame-retardant polyisocyanurate foam, there can be mentioned a polyol having a low organic substance content, an alkylene oxide-containing polyol having a high ethylene oxide content, a polyol having an ester bond and a polyol as mentioned in (d) above. An aromatic polyester polyol per se is effective for improving the flame retardancy, and effectively improves the mechanical strength.

All of foaming agents customarily used for the production of isocyanurate foams and polyisocyanurate foams can be used as the foaming agent in the present invention. For example, there can be mentioned flon compounds as the low-boiling-point solvent, such as trichlorofluoromethane and dichlorodifluoromethane, compounds generating a gas by the methylene chloride reaction, such as water, acid amides and nitroalkane, and compounds generating a gas by the thermal decomposition, such as sodium bicarbonate and ammonium carbonate. Of these foaming agents, a flon type foaming agent, especially trichlorofluoromethane, is preferably used.

All of catalysts customarily used for the production of isocyanurate foams can be used as the catalyst in the present invention. For example, there can be used metal salts such as sodium acetate and potassium naphthenate, and tertiary amines such as triethylamine and N,N'N''-tris(dimethylaminopropyl)-hexahydrotriazine.

In the present invention, surface active agents (foam stabilizers) and other adjuvants can be incorporated and used in the present invention according to need.

Nonionic surface active agents, cationic surface active agents and anionic surface active agents can be used as the surface active agent (foam stabilizer), but a silicone type surface active agent is preferably used.

As other adjuvants, there can be mentioned addition type flame retardants such as phosphorus- and/or halogen-containing organic compounds, halogen-containing resins and antimony oxide, coloring powders such as pigments and dyes, powders of talc and graphite, glass fibers, other inorganic extenders, and organic solvents.

The flame-retardant polyisocyanurate foam of the present invention can be prepared by using the above-mentioned polyisocyanate, polyhydroxyl compound, foaming agent and catalyst in the same manner as adopted for the production of conventional foams except that the above-mentioned thermally expansible graphite is added as the flame retardant. Namely, the starting materials are maintained at an appropriate temperature, usually 15 to 25°C, and are mixed and stirred.

In general, starting materials other than the polyisocyanate are added to the polyhydroxyl compound, and are mixed. In the production of the flame-retardant polyisocyanurate foam of the present invention, the method of adding the thermally expansible graphite is not particularly critical, and the reaction can be carried out by adding the thermally expansible graphite either to the polyisocyanate side or to the polyhydroxyl compound side. In this case, the thermally expansible graphite may be added either with or without preheated.

In the present invention, the thermally expansible graphite is preferably added in an amount of 3 to 50% by weight based on the obtained foam. If the amount added of the thermally expansible graphite is smaller than 3% by weight, a satisfactory effect of improving the flame retardancy can not be attained. If the amount added of the thermally expansible graphite exceeds 50% by weight, there is a risk of a reduction of the characteristics of the foam.

By reacting a polyisocyanate with a polyhydroxyl compound at an NCO/OH equivalent ratio of at least 1.5, a polyisocyanurate having an especially excellent heat resistance and flame resistance can be obtained.

When thermally expansible graphite falls into contact with a flame, the graphite abruptly expands to control combustion of the foam or prevent the spreading of the flame, i.e., an excellent improvement of the flame retardancy can be obtained.

Therefore, according to the present invention, due to not only an excellent heat resistance and flame resistance of the polyisocyanurate foam but also a flame retardancy-improving effect from the thermally expansible graphite, there can be provided an especially excellent flame-retardant polyisocyanurate foam.

The present invention will now be described in detail with reference to the following examples and comparative examples, that by no means limit the scope of the invention.

The following starting materials were used in the examples and comparative examples.

Starting Materials Used

Polyisocyanate:

Polymethylene-polyphenylene polyisocyanate (supplied under tradename of "PAPI-135" by M.D. Kasei; NCO equivalent = 138)

Polyol:

(1) An aromatic polyester polyol formed by ester exchange reaction between a polycarboxylic acid and diethylene glycol (supplied under tradename of "PX-850" by M.D. Kasei; OH equivalent = 175).

(2) A polyether polyol formed by adding propylene oxide to glycerol (supplied under tradename of "GP-250" by Sanyo Kasei; OH equivalent = 83)

Surface Active Agent:

A silicone type surface active agent (supplied under tradename of "SH-193" by Toray Silicone)

Catalyst:

(1) Amine type catalyst

Trisdimethylaminopropyl-S-triazine (supplied under tradename of "Polycat 41" by Sanapro)

(2) Alkali metal salt

An alkali metal salt type catalyst (supplied under tradename of "Curithene-51" supplied by M.D. Kasei)

Catalyst:

(1) Amine type catalyst

An amine type catalyst (supplied under tradename of "Kao No. 1" by Kao)

Flame Retardant

(1) A phosphorus- and halogen-containing flame retardant (supplied under tradename of "Firol CEF" by Kashima Kogyo)

(2) Thermally expansible graphite

$NH_3$-treated thermally expansible graphite (supplied by Nippon Kasei)

(3) Thermally expansible graphite

KOH-treated thermally expansible graphite (supplied by Nippon Kasei)

Foaming Agent:

A Freon type foaming agent (supplied under tradename of "R-11E" by Asahi Glass).

The physical properties of the obtained polyisocyanurate foams were evaluated according to the following methods.

Evaluation Methods

Flame retardancy:

The flame retardancy was evaluated according to JIS K-7201 (oxygen index method) and JIS A-1321 (surface test).

Mechanical strength:

The compression strength was determined according to JIS A-9514.

Heat conductivity:

The heat conductivity was determined according to ASTM C-177.

Brittleness:

The weight loss (%) was determined according to the test method of ASTM C-421.

Example 1

When reacting a polymeric isocyanate (supplied under tradename of "PAPI-135") with a liquid mixture comprising an aromatic polyester polyol (supplied under tradename of "PX-850"), a silicone type surface active agent (supplied under tradename of "SH-193"), a catalyst (supplied under tradename of "Curithene 51") and a Freon type foaming agent (supplied under tradename of "R-11E") at a ratio shown in Table 1, a thermally expansible graphite ($NH_3$-treated product) was added in an amount shown in Table 1, and the mixture was blended at a liquid temperature of 20°C by a stirrer to effect foaming reaction and obtain a flame-retardant polyisocyanurate foam. The time required for the foaming was as shown in Table 1.

The physical properties of the obtained flame-retardant polyisocyanurate foam are shown in Table 1.

Examples 2 through 8 and Comparative Examples 1 through 3

Foams were prepared in the same manner as described in Example 1 except that the amounts and kinds of the starting materials were changed as shown in Table 1. The physical properties of the obtained foams are shown in Table 1.

From the results shown in Table 1 it is understood that, according to the process of the present invention where in a thermally expansible graphite is added, the oxygen index is prominently improved at the test of JIS K-7201 and the flame resistance is improved at the surface test of JIS A-1321. Namely, it is understood that, when the thermally expansible graphite falls into contact with a flame, the graphite expands and acts as a barrier between organic layers and the afterflaming time is shortened, and by this excellent barrier effect, the flame retardancy is highly improved.

It also is understood that a thermally expansible graphite treated with an alkali metal or alkaline earth metal is used, and especially good results are obtained without a reduction of the compression strength of the foam or a reduction of the reaction speed.

Table 1

| | | Comparative Example No. | | | Example No. | | | | | | | |
|---|---|---|---|---|---|---|---|---|---|---|---|---|
| | | 1 | 2 | 3 | 1 | 2 | 3 | 4 | 5 | 6 | 7 | 8 |
| Recipe (parts by weight) | PAPI-135 | 150 | 150 | 150 | 150 | 150 | 150 | 150 | 150 | 150 | 150 | 150 |
| | PX-850 | | 53 | 53 | 53 | 53 | | | 53 | 53 | 53 | 53 |
| | GP-250 | 22 | | | | | 22 | | | | | |
| | SH-193 | 3 | 3 | 3 | 3 | 3 | 3 | 3 | 3 | 3 | 3 | 3 |
| | Curithene-51 | 6 | 6 | 6 | 6 | 6 | 6 | 6 | 6.4 | 6.4 | 7.4 | 7.4 |
| | Polycat-41 | 1.5 | | | | | 1.5 | 1.5 | | | | |
| | $R\text{-}11_E$ | | | 15 | | | | | | | | |
| | Firol CEF | 27 | 45 | 48 | 48 | 48 | 30 | 30 | 50 | 50 | 58 | 58 |
| | thermally expansible graphite ($NH_3$-treated product) | | | | 15 | | 15 | | 30 | | 70 | |
| | thermally expansible graphite (KOH-treated product) | | | | | 15 | | 15 | | 30 | | 70 |
| equivalent ratio (NCO/QH) | | 3.0 | 3.0 | 3.0 | 3.0 | 3.0 | 3.0 | 3.0 | 3.0 | 3.0 | 3.0 | 3.0 |
| liquid temperature (°C) | | 20 | 20 | 20 | 20 | 20 | 20 | 20 | 20 | 20 | 20 | 20 |

Table 1 (Continued)

| | | | Comparative Example No. | | | Example No. | | | | | | | |
|---|---|---|---|---|---|---|---|---|---|---|---|---|---|
| | | | 1 | 2 | 3 | 1 | 2 | 3 | 4 | 5 | 6 | 7 | 8 |
| cream time (sec) | | | 15 | 12 | 12 | 15 | 13 | 18 | 14 | 14 | 13 | 16 | 13 |
| rise time (sec) | | | 35 | 34 | 33 | 40 | 35 | 41 | 36 | 45 | 36 | 45 | 35 |
| Physical Properties | foam density ($kg/m^3$) | | 30.0 | 30.5 | 31.0 | 31.5 | 31.5 | 30.8 | 30.5 | 31.2 | 31.5 | 30.8 | 31.0 |
| | oxygen index (JIS-K-7201) | | 22.0 | 22.5 | 23.2 | 24.5 | 24.5 | 23.1 | 23.2 | 25.6 | 25.6 | 27.0 | 26.9 |
| | sur-face test | smoke coefficient ($C_A$) | 112 | 85 | 88 | 85 | 80 | 110 | 115 | 95 | 90 | 85 | 80 |
| | | smoke temperature-time area (°C·min) | 200 | 140 | 135 | 155 | 160 | 185 | 195 | 145 | 135 | 135 | 150 |
| | | afterflaming time (sec) | 32 | 20 | 18 | 5 | 7 | 10 | 12 | 0 | 0 | 0 | 0 |
| | | deformation | large | medium | medium | medium | medium | large | medium | medium | medium | medium | medium |

Table 1 (Continued)

| | Comparative Example No. | | | Example No. | | | | | | | |
|---|---|---|---|---|---|---|---|---|---|---|---|
| | 1 | 2 | 3 | 1 | 2 | 3 | 4 | 5 | 6 | 7 | 8 |
| heat conductivity (Kcal/mhr°C) | 0.0162 | 0.0160 | 0.0160 | 0.0165 | 0.0165 | 0.0166 | 0.0165 | 0.0166 | 0.0168 | 0.0165 | 0.0166 |
| compression strength ($kg/cm^2$) // | 2.0 | 1.8 | 1.8 | 1.6 | 1.8 | 1.7 | 1.8 | 1.5 | 1.6 | 1.2 | 1.5 |
| compression strength ($kg/cm^2$) ⊥ | 1.1 | 1.0 | 0.9 | 0.9 | 1.0 | 0.7 | 1.0 | 0.5 | 0.9 | 0.4 | 0.8 |
| brittleness (ASTM C-421), weight loss (%) | 89 | 88 | 85 | 88 | 85 | 90 | 88 | 85 | 89 | 85 | 85 |

As apparent from the foregoing detailed description, in the process for the preparation of a flame-retardant polyisocyanurate foam according to the present invention, due to not only an excellent heat resistance and flame resistance of the polyisocyanurate foam prepared at a specific NCO/OH equivalent ratio but also an excellent flame retardancy-improving effect through an incorporation of thermally expansible graphite, there can be provided a flame-retardant polyisocyanurate foam having a much improved flame retardancy over the conventional products.

When thermally expansible graphite containing a sulfate of an alkali metal or alkaline earth metal is used as the thermally expansible graphite and the pH value of an aqueous dispersion of the thermally

expansible graphite having a concentration of 1% by weight is at least 4.5, the flame retardancy is especially highly improved.

INDUSTRIAL APPLICABILITY

The present invention can be advantageously used for producting a polyisocyanurate foam having an excellent flame-retardance.

## Claims

1. A process for the preparation of a flame-retardant polyisocyanurate foam, which comprises reacting a polyisocyanate with a polyhydroxyl compound at an NCO/OH equivalent ratio of at least 1.5 in the presence of a catalyst and a foaming agent, wherein thermally expansible graphite is added as a flame retardant.

2. A process according to claim 1, wherein the NCO/OH equivalent ratio is 2.5 to 6.0.

3. A process according to claim 1, wherein the thermally expansible graphite has an expansion degree of 50 to 250 cc/g when suddenly heated at 100 °C for 10 seconds.

4. A process according to claim 1, wherein the thermally expansible graphite contains an alkali metal or alkaline earth metal.

5. A process according to claim 4, wherein the thermally expansible graphite contains a sulfate of an alkali metal or alkaline earth metal, and has a pH of not lower than 4.5 in an aqueous dispersion of a concentration of 1% by weight.

6. A process according to claim 1, wherein the thermally expansible graphite has a particle size of 30 to 100 mesh.

7. A process according to claim 1, wherein the thermally expansible graphite is added in an amount of 3 to 50% by weight based on the weight of the foam.

8. A process according to claim 1, wherein the polyisocyanate is selected from aliphatic polyisocyanates such as hexamethylene diisocyanate and isophorone diisocyanate, aromatic polyisocyanates such as toluene diisocyanate, diphenylmethane diisocyanate and polymeric diphenylmethane diisocyanate, and carbodiimide and prepolymer modification products thereof.

9. A process according to claim 1, wherin the polyhydroxyl compound is selected from alcohols, amines, polyether polyols, polyester polyols and other polyols.

10. A process according to claim 1, wherein the trichlorofluoromethane, dichlorodifluoromethane, water, an acid amide, a nitroalkane, sodium bicarbonate or ammonium carbonate is used as the foaming agent.

11. A process according to claim 1, wherein a metal salt such as sodium acetate or potassium naphthenate, or a tertiary amine such as triethylamine or N,N',N''-tris(dimethylaminopropyl)-hexahydrotriazine.

# INTERNATIONAL SEARCH REPORT

International Application No PCT/JP90/00373

**I. CLASSIFICATION OF SUBJECT MATTER** (if several classification symbols apply, indicate all) [6]

According to International Patent Classification (IPC) or to both National Classification and IPC

Int. $Cl^5$ C08J9/04

**II. FIELDS SEARCHED**

Minimum Documentation Searched [7]

| Classification System | Classification Symbols |
|---|---|
| IPC | C08J9/00 - C08J9/14 |

Documentation Searched other than Minimum Documentation to the Extent that such Documents are Included in the Fields Searched [8]

| | |
|---|---|
| Jitsuyo Shinan Koho | 1926 - 1990 |
| Kokai Jitsuyo Shinan Koho | 1971 - 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, B2, 61-29374 (Mitsuboshi Belting Ltd.), 7 July 1986 (07. 07. 86), Scope of Claim, line 10, column 2 to line 16, column 3 (Family: none) | 1 - 11 |
| Y | JP, A, 59-80419 (Nippon Urethane Service K.K.), 9 May 1984 (09. 05. 84), Scope of Claim, lines 5 to 8, lower right column, page 1; line 3, upper right column, page 2 to line 1, upper right column; page 3 (Family: none) | 1 - 11 |
| Y | US, A, 3,574,644 (The Dow Chemical Co.), 13 April 1971 (13. 04. 71), Line 26, column 1 to line 9, column 2; lines 52 to 72, column 3 | 1 - 11 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or *other means*

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| May 24, 1990 (24. 05. 90) | June 11, 1990 (11. 06. 90) |
| **International Searching Authority** | **Signature of Authorized Officer** |
| Japanese Patent Office | |